## Europäisches Patentamt

## European Patent Office

## Office européen des brevets

(19)

(11) Veröffentlichungsnummer: **0 086 531**
**B1**

(12)                    **EUROPÄISCHE PATENTSCHRIFT**

(45) Veröffentlichungstag der Patentschrift:
20.05.87

(21) Anmeldenummer: **83200189.5**

(22) Anmeldetag: **07.02.83**

(51) Int. Cl.⁴: **G 01 H 3/12**, G 10 K 11/34

(54) **Anordnung zur Untersuchung mit Ultraschall.**

(30) Priorität: **11.02.82 DE 3204829**

(43) Veröffentlichungstag der Anmeldung:
**24.08.83 Patentblatt 83/34**

(45) Bekanntmachung des Hinweises auf die Patenterteilung:
**20.05.87 Patentblatt 87/21**

(84) Benannte Vertragsstaaten:
**BE DE FR GB SE**

(56) Entgegenhaltungen:
**EP-A-0 017 216**
**DE-A-2 803 168**
**FR-A-2 198 149**

**IBM TECHNICAL DISCLOSURE BULLETIN, Band 20, Nr. 9, Februar 1978, Seiten 3749-3751, New York, USA. I. BERGER et al.: "Two-dimensional acoustic beam detector"**
**THE JOURNAL OF THE ACOUSTICAL SOCIETY OF AMERICA, Band 69, Nr. 3, März 1981, Seiten 853-859, New York, USA. A. S. DeREGGI et al.: "Piezoelectric polymer probe for ultrasonic applications"**

(73) Patentinhaber: **Philips Patentverwaltung GmbH, Billstrasse 80, D-2000 Hamburg 28 (DE)**
(84) Benannte Vertragsstaaten: **DE**

(73) Patentinhaber: **N.V. Philips' Gloeilampenfabrieken, Groenewoudseweg 1, NL- 5621 BA Eindhoven (NL)**
(84) Benannte Vertragsstaaten: **BE FR GB SE**

(72) Erfinder: **Schomberg, Hermann, König- Heinrich- Weg 127d, D-2000 Hamburg 61 (DE)**

(74) Vertreter: **Hartmann, Heinrich, Dipl.- Ing., Philips Patentverwaltung GmbH Billstrasse 80 Postfach 10 51 49, D-2000 Hamburg 28 (DE)**

## Beschreibung

Die Erfindung betrifft eine Anordnung gemäß dem Oberbegriff des Hauptanspruchs.

Eine solche Anordnung ist aus der EP-A-0 017 216 bekannt. Diese Anordnung hat den Vorteil, daß Sende- und Empfangsrichtung identisch sind. Da dabei die Ultraschallerzeugung und der Ultraschallempfang durch unterschiedliche Elemente erzeugt werden, müssen hinsichtlich des Sendewirkungsgrades und der Empfangsempfindlichkeit des Frequenzganges und der räumlichen Auflösung keine Kompromisse eingegangen werden, die erforderlich wären, wenn die Erzeugung und der Empfang der Ultraschallsignale durch das gleiche Element erfolgen würde. Die bekannte Anordnung besteht aus einer Sendeschicht aus einem Material mit relativ hoher dielektrischer Konstante und hoher Schallimpedanz und einer Empfangsschicht, die vorzugsweise aus einer piezoelektrischen Kunststofffolie besteht, wie sie auch aus "J. Accoust. Soc. Am.69(3)" März 1981 bekannt ist und die auf ihrem durch die mechanische und die elektrische Vorbehandlung aktiven Bereich Elektroden zur Erfassung der durch Ultraschall erzeugten Ladungen bzw. Spannungen trägt. Bei der bekannten Anordnung sind die Sendeschicht und die Empfangsschicht in Hybridtechnik flächig aufeinander liegend miteinander verbunden. Zwischen den beiden Schichten befindet sich eine Kontaktierung, die beim Senden zur Anregung der Sendeschicht und beim Empfangen zum Umsetzen der auf der Empfangsschicht hervorgerufenen Spannungs- bzw. Ladungsverteilungen in ein elektrisches Signal dient. Wegen dieser Doppelfunktion der Kontaktierung ist es nicht möglich, das von der Empfangsschicht emittierte Signal schon zu messen, wenn es - bevor es den Untersuchungsbereich erreicht - die Empfangsschicht durchsetzt. Bei einigen Untersuchungsverfahren - z.B. bei dem nach der DE-OS 30 24 995 - ist es jedoch erwünscht, auch die emittierten Ultraschallimpulse zu messen.

Aufgabe der vorliegenden Erfindung ist es daher, eine Anordnung der eingangs genannten Art so auszubilden, daß auch die vom Ultraschallsender emittierten Impulse von ihr gemessen werden können.

Diese Aufgabe wird erfindungsgemäß durch die im Kennzeichen des Hauptanspruches angegebenen Maßnahmen gelöst.

Die Erfindung nutzt die Tatsache aus, daß ein solcher Ultraschallempfänger das Ultraschallfeld praktisch nicht verändert, so daß er ohne weiteres in der Senderichtung des Ultraschallsenders angeordnet werden kann. Der Empfänger kann daher sowohl die emittierten als auch die reflektierten Ultraschallimpulse messen. Dabei ist dafür Sorge zu tragen, daß die durch die emittierten Ultraschallwellen an den Elektroden hervorgerufenen Ladungen bei Beginn der Messung der reflektierten Ultraschallwellen abgeflossen sind - z.B. durch Kurzschließen der Elektroden vor Beginn dieser Messungen.

Die Erfindung wird nachstehend anhand der Zeichnung näher erläutert. Es zeigen

Fig. 1 einen die Längsachse enthaltenden Schnitt durch eine Ultraschall-Untersuchungsanordnung nach der Erfindung,

Fig. 2 eine besondere Ausgestaltung der Elektroden,

Fig. 3 und 3a, und 4a-4d weitere Ausgestaltungsformen der Elektroden, und

Fig. 5 eine Ausführungsform zur Abtastung des Ultraschallfeldes in einem zweidimensionalen Bereich.

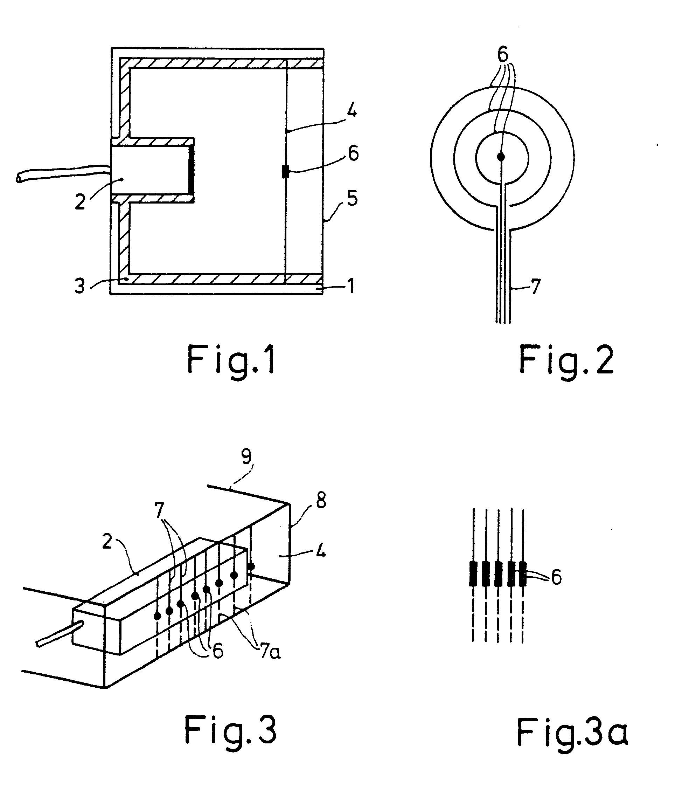

In Fig. 1 ist in einem rotationssymmetrischen, nach rechts hin offenen Gehäuse 1 ein Ultraschallsender 2 angeordnet. Ein akustischer Isolator 3 verhindert, daß das Gehäuse 1 durch den Ultraschallsender 2 zum Schwingen gebracht wird. Der Ultraschallsender 2 kann von bekannter Bauart sein vgl. z.B. Wells "Physical Principles of Ultrasonic Diagnosis" 1969, Seite 38, Fig. 2.4.

Als Ultraschallempfänger ist eine Folie 4 aus einem geeigneten semikristallinen Polymer, z.B. Polyvinylidenfluorid, vorgesehen, die senkrecht zur Rotationsachse bzw. zur Zeichenebene am Gehäuse 1 auf geeignete Weise eingespannt und beidseitig mit einander gegenüberliegenden, punktförmigen Elektroden 6 versehen ist. Die aktiven Bereiche auf der Folie werden dadurch erzeugt, daß die Folie gereckt wird und bei hoher Temperatur einer großen elektrischen Feldstärke im Bereich der Elektroden ausgesetzt wird, indem an die Elektroden eine elektrische Gleichspannung angelegt wird, so daß sich zwischen den Elektroden eine Feldstärke von etwa 1MV/cm ergibt - wie aus "Journal of Accoustical Society America" bekannt. Form und Größe der Elektroden bestimmen das räumliche Auflösungsvermögen des Ultraschallempfängers. Die Elektroden werden ebenso wie die zu innen führenden Zuleitungen auf die Folien aufgedampft, wobei dafür gesorgt werden muß, daß die Zuleitungen sich nicht überlappen. Anstelle einer einschichtigen Folie kann auch ein Laminat aus zwei miteinander verbundenen Folien verwendet werden, wie in der genannten Veröffentlichung, insb. Fig. 2, angegeben.

Die rechte Seite des Gehäuses 1 ist von einem akustischen Fenster 3 in Form einer dünnen Folie abgeschlossen, die die Druckunterschiede zwischen außen und innen auffängt. Zwischen dem Fenster 3 und der Folie 4 sowie in dem Zwischenraum zwischen der Folie 4 und dem Ultraschallsender 2 befindet sich eine geeignete Flüssigkeit, z.B. Wasser oder Silikonöl.

Die vom Ultraschallsender ausgesandten Ultraschallimpulse werden durch die dünne Folie 4 (Dicke in der Größenordnung von 10 μm) und das akustische Fenster praktisch nicht beeinflußt und können somit ungestört den zu untersuchenden Körper erreichen. Bereits bei der Aussendung des Ultraschallimpulses kann dessen Intensität mit Hilfe des mit der Folie 4 aufgebauten Ultraschallempfängers gemessen werden. Da die durch die Ultraschallsendeimpulse am Ort der Folie erzeugten Drucke wesentlich größer sind als die durch die vom Untersuchungsobjekt reflektierten Echoimpulse erzeugten Drucke, muß auf geeignete Weise - z.B. durch Kurzschließen der Elektroden 6 - dafür gesorgt werden, daß die an den Elektroden 6 durch den Ultraschallsendeimpuls erzeugten Ladungsträger abgeflossen sind, bevor der Echoimpuls die Folie 4 erreichen kann. Aufgrund der hervorragenden Übertragungseigenschaften des aus der Folie 4 mit den darauf befindlichen Elektroden 6 bestehenden Ultraschaltempfangers ist eine genaue Messung in einem sehr breiten Frequenzbereich möglich.

Wenn die Ultraschallsende- und -empfangsanordnung in einem mit Flüssigkeit gefüllten Tank o.dgl. benutzt wird, wo sie ständig von Flüssigkeit umgeben ist, kann das Gehäuse 1 durch eine geeignete Halterungsvorrichtung ersetzt werden, wobei das akustische Fenster 3 entfallen kann.

In Fig. 2 ist eine andere Elektrodenanordnung dargestellt, bei der eine zentrale punktförmige Elektrode von mehreren ringförmigen, dazu konzentrisch angeordneten Elektroden umschlossen wird, wobei die Zuleitungen zu den Elektroden sich gegenseitig nicht kreuzen. Damit ist es möglich, rotationssymmetrische Druckverteilungen zu erfassen.

In Fig. 3 ist eine Ultraschallsende- und -empfangsanordnung dargestellt, die vorzugsweise für die ständige Benutzung innerhalb einer Flüssigkeit ausgebildet ist. Sie umfaßt einen an einer Haltevorrichtung 9 befestigten Rahmen 8, in dem die piezoelektrische Folie 4 eingespannt ist. Auf der Folie befindet sich eine Vielzahl von auf einer gemeinsamen Linie liegenden Elektroden 6, so daß ein Ultraschallfeld zumindest in einer Richtung erfaßt werden kann. Dahinter ist wiederum ein Ultraschallsender 2 angeordnet, der den gleichen Aufbau haben kann wie der in Fig. 1 dargestellte, der aber auch aus einem Array von mehreren Ultraschallsendern bestehen kann. Wenn eine einschichtige Folie benutzt wird, auf der die Elektroden 6 beidseitig und einander gegenüberliegend angebracht sind, dürfen die Zuleitungen zu den Elektroden sich nicht kreuzen bzw. überdecken. Zu diesem Zweck müssen die Zuleitungen unter einem Winkel zu der durch die Elektroden 6 gebildeten Geraden verlaufen, z.B. rechtwinklig, wobei die Zuleitungen auf der einen Seite von unten und auf der anderen Seite von oben zu den Elektroden 6 hinlaufen, wie durch die ausgezogenen bzw. gestrichelten Linien 7 und 7a angedeutet. Anstelle eines punktförmigen Elektrodenmusters kann auch ein strichförmiges Elektrodenmuster verwendet werden, wie in Fig. 3a dargestellt.

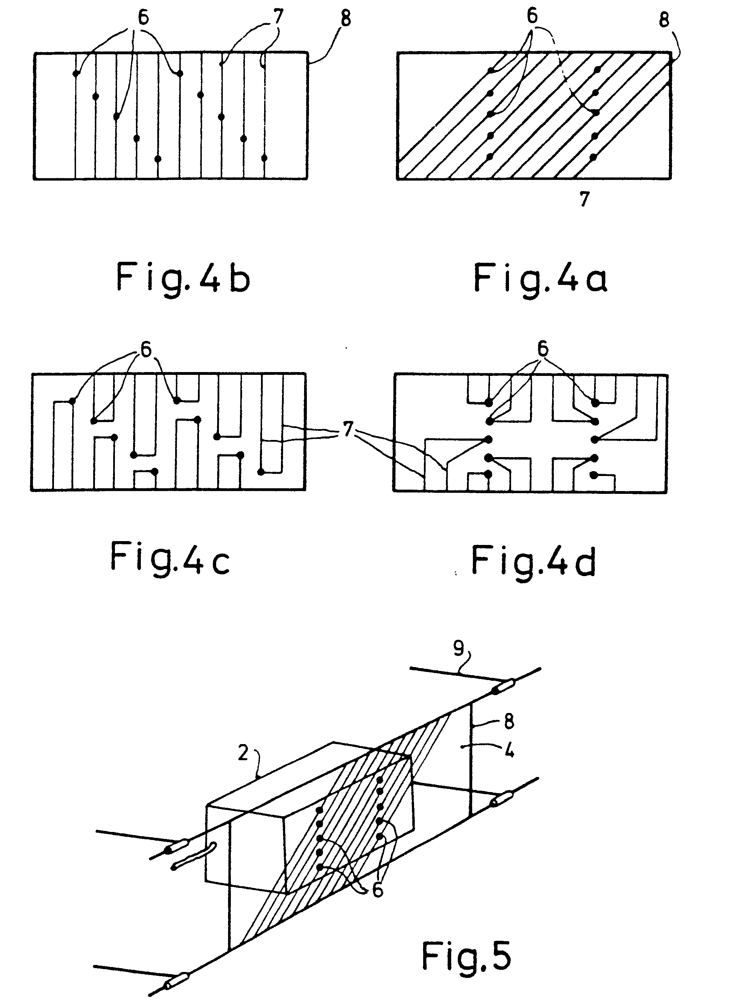

Die in Fig. 4a und 4b dargestellten Elektrodenanordnungen unterscheiden sich von der in Fig. 3 dargestellten Anordnung dadurch, daß die Elektroden auf die in den Rahmen 8 eingespannten Folien auf zueinander parallelen Geraden liegen, wobei die Geraden bei der Anordnung nach Fig. 4a parallel zu einer der Rahmenkanten verlaufen und bei der Anordnung nach Fig. 4b unter einem von 0 und 90 Grad verschiedenen Winkel dazu. Deshalb verlaufen bei der Anordnung nach Fig. 4a die Zuleitungen unter einem von 0 Grad verschiedenen Winkel zu den Rahmenkanten bzw. zu den die Elektroden 6 verbindenden Geraden, während sie bei der Anordnung nach Fig. 4b parallel zu einer der Rahmenkanten verlaufen könnten. In Fig. 4c und d sind Elektrodenanordnungen dargestellt, die denen nach Fig. 4b bzw. 4d entsprechen, jedoch sind die Zuleitungen zu den Elektroden so geführt, daß die Zuleitungen für eine Elektrode jeweils auf einer Seite des Rahmens enden.

Die in Fig. 4a und 4b dargestellten Elektrodenanordnungen können gemäß Fig. 3 zur Abtastung eines zweidimensionalen Feldes benutzt werden, indem der Rahmen 9 mit der Folie 4 während der Messung in der Folienebene in einer Richtung verschoben werden, die von der Richtung der die Elektroden verbindenden Geraden abweicht. Dabei werden vom Ultraschallsender 2 wiederholt (gleichartige) Impulse ausgesandt und die Elektroden messen die rückgestreuten Ultraschallwellen, an der Stelle an der sie sich gerade befinden. Dieses Verfahren ist allerdings nur in einem mit Flüssigkeit gefüllten Tank anwendbar.

**Patentansprüche**

1. Anordnung zur Untersuchung eines Bereichs mit Ultraschall, mit einem Ultraschallsender (2) und einem Ultraschallempfänger mit einer piezoelektrischen Folie (4), die auf ihrem der Ultraschallwandlung dienenden aktiven Bereich Elektroden (6) zur Erfassung der durch Ultraschall erzeugten Ladungen bzw. Spannungen trägt und so angeordnet ist, daß sie von den vom Ultraschallsender erzeugten Ultraschallwellen durchsetzt wird, bevor diese den Untersuchungsbereich erreichen, dadurch gekennzeichnet, daß zwischen dem Ultraschallsender (2) und dem Ultraschallempfänger (4) ein mit einer Flüssigkeit gefüllter Zwischenraum vorhanden ist und daß der Ultraschallempfänger so geschaltet ist, daß er sowohl die vom Sender emittierten als auch die im Untersuchungsbereich reflektierten Ultraschallwellen messen kann.

2. Anordnung nach Anspruch 1, dadurch gekennzeichnet, daß die Elektroden (6) der Folie (4) ein zweidimensionales Muster bilden.

3. Anordnung nach Anspruch 1, dadurch gekennzeichnet, daß die Elektroden (6) auf wenigstens einer Geraden angeordnet sind, und daß die Folie in ihrer Ebene in einer von der Richtung der Geraden abweichenden Richtung verschiebbar ist.

4. Anordnung nach Anspruch 1, dadurch gekennzeichnet, daß die Elektroden auf wenigstens einer Linie angeordnet sind, und daß die Zuleitungen zu den Elektroden auf der Folie (4) unter einem von Null Grad verschiedenen Winkel zu den Linien verlaufen.

## Claims

1. A device for the ultrasonic examination of a region, including an ultrasonic transmitter (2) and an ultrasonic receiver which includes a piezoelectric foil (4) whose active area, serving for the ultrasonic conversion, supports electrodes (6) for picking up the charges or voltages generated by ultrasound, which foil is arranged so that the ultrasonic waves produced by the ultrasonic transmitter pass through the foil before reaching the examination region, characterized in that between the ultrasonic transmitter (2) and the ultrasonic receiver (4) there is a space which is filled with a liquid, the ultrasonic receiver being connected so that it can measure the ultrasonic waves transmitted by the transmitter as well as those reflected in the examination region.

2. A device as claimed in Claim 1, characterized in that the electrodes (6) of the foil (4) form a two-dimensional pattern.

3. A device as claimed in Claim 1, characterized in that the electrodes (6) are arranged on at least one straight line and that the foil can be moved in its plane in a direction which deviates from the direction of the straight line.

4. A device as claimed in Claim 1, characterized in that the electrodes (6) are arranged on at least one line and that the leads to the electrodes on the foil (4) extend at an angle to the lines which differs from 0°.

## Revendications

1. Dispositif d'examen d'une zone par ultrasons, comprenant un émetteur d'ultrasons (2) et un récepteur d'ultrasons comportant une feuille piezo-électrique (4) qui, sur sa partie active servant à convertir les ultrasons, porte des électrodes (6) pour détecter des charges ou des tensions engendrées par ultrasons et qui est disposée de façon qu'elle soit traversée par les ondes ultrasonores engendrées par l'émetteur d'ultrasons avant que celles-ci n'atteignent la zone à examiner, caractérisé en ce que l'émetteur d'ultrasons (2) et le récepteur d'ultrasons (4) sont séparés par un espace rempli d'un liquide et en ce que le récepteur d'ultrasons est connecté de façon à être capable de mesurer aussi bien les ondes ultrasonores émises par l'émetteur que celles réfléchies dans la zone d'examen.

2. Dispositif selon la revendication 1, caractérisé en ce que les électrodes (6) de la feuille (4) forment une configuration bidimensionnelle.

3. Dispositif selon la revendication 1, caractérisé en ce que les électrodes (6) sont disposées sur au moins une droite et en ce que la feuille peut être déplacée dans son plan, dans une direction différente de la direction de la droite.

4. Dispositif selon la revendication 1, caractérisé en ce que les électrodes (6) sont disposées sur au moins une ligne et en ce que les conducteurs d'alimentation des électrodes s'étendent sur la feuille (4) de façon à faire avec la ligne un angle différent de zéro degré.

**Fig.1**

**Fig.2**

**Fig.3**

**Fig.3a**

0 086 531

Fig.4b

Fig.4a

Fig.4c

Fig.4d

Fig.5